# EUROPEAN PATENT APPLICATION

(11) **EP 4 744 913 A1**
(43) Date of publication of application: **20.05.2026**
(21) Application number: 24903231.9
(22) Date of filing: 08.08.2024
(51) Int. Cl.: B60C 19/00, B60C 7/00, B60C 9/22

(54) **TIRE AND NON-PNEUMATIC TIRE**

(30) Priority: 12.12.2023 JP 2023209532; 13.12.2023 JP 2023210566
(71) Applicant: BRIDGESTONE CORPORATION, Chuo-ku Tokyo 104-8340 (JP)
(72) Inventor: KAMADA, Takehito, Tokyo 104-8340 (JP); SUKEGAWA, Shin, Tokyo 104-8340 (JP); ITO, Yujiro, Tokyo 104-8340 (JP); HOSHINO, Hironori, Tokyo 104-8340 (JP)
(74) Representative: Marks & Clerk LLP
(86) International application number: PCT/JP2024/028557
(87) International publication number: WO 2025/126568

(57) **Abstract**

A tire includes: a tire frame member including a bead portion, a side portion continuous with a tire radial direction outer side of the bead portion, and a crown portion continuous with a tire width direction inner side of the side portion, the tire frame member being circular; a spiral belt disposed at a tire radial direction outer side of the crown portion, the spiral belt being formed by spirally winding, in a tire circumferential direction, a covered cord comprising one or a plurality of reinforcing cords that are covered with a resin or rubber; and an RF tag disposed at the tire radial direction outer side of the crown portion, the RF tag being disposed at least partially on an extended line of the covered cord, the extended line extending from one end portion of the covered cord in a plan view.

## Description

### Technical Field

The present disclosure relates to a tire and a non-pneumatic tire.

### Background Art

A tire incorporating an RF tag including an RFID chip and an antenna (also referred to as "RF tag") is known (see, for example, Japanese Patent Application Laid-Open (JP-A) No. 2023-87600).

Japanese Patent Application Laid-Open (JP-A) No. 2016-179731 discloses a non-pneumatic tire. The non-pneumatic tire disclosed in JP-A No. 2016-179731 includes an attachment body attached to an axle, an outer tubular body configured to surround the attachment body from the outer side in a tire radial direction, a tread portion configured to surround the outer tubular body from the outer side in the tire radial direction, and a connecting member configured to connect the attachment body to the outer tubular body displaceably. To the outer circumferential surface of the outer tubular body of the non-pneumatic tire described in JP-A No. 2016-179731, a spiral reinforcing layer is adhered that is formed, on the outer circumferential surface of the outer tubular body, by spirally winding an element wire body in which one cord or a plurality of cords parallel to each other are embedded in a covering body.

### SUMMARY OF INVENTION

### Technical Problem

A tire is known in which a spiral belt obtained by spirally winding a resin-covered cord in a tire circumferential direction is disposed at the tire radial direction outer side of a crown portion of a tire frame member. In the case of disposing an RF tag on such a tire, the RF tag is disposed at the crown portion and on a side of an end portion of the resin-covered cord in consideration of breakage of the RF tag, and the like. However, in the case of ensuring a space to dispose the RF tag, the width of the spiral belt is narrowed with respect to the crown portion by the space to dispose the RF tag.

The inventor of the disclosure has newly conceived providing a communication device (for example, an RF tag) in a non-pneumatic tire as described in JP-A No. 2016-179731, and has newly found a configuration capable of suppressing damage of the communication device in the non-pneumatic tire at the time of traveling of a vehicle to which the non-pneumatic tire is fitted (hereinafter, simply referred to as "at the time of vehicle traveling"), and has completed the disclosure.

An object of one aspect of the disclosure is to ensure the width of a spiral belt with respect to a crown portion in a tire in which the spiral belt and an RF tag are disposed at the tire radial direction outer side of the crown portion of a tire frame member. An object of another aspect of the disclosure is to suppress damage of a communication device in a non-pneumatic tire at the time of vehicle traveling.

### Solution to Problem

One aspect of the disclosure is
a tire, including:
a tire frame member including a bead portion, a side portion continuous with a tire radial direction outer side of the bead portion, and a crown portion continuous with a tire width direction inner side of the side portion, the tire frame member being circular;
a spiral belt disposed at a tire radial direction outer side of the crown portion, the spiral belt being formed by spirally winding, in a tire circumferential direction, a covered cord comprising one or a plurality of reinforcing cords that are covered with a resin or rubber; and
an RF tag disposed at the tire radial direction outer side of the crown portion, the RF tag being disposed at least partially on an extended line of the covered cord, the extended line extending from one end portion of the covered cord in a plan view.

Another aspect of the disclosure is
a non-pneumatic tire, including:
a wheel member attachable to an axle;
a ring member fitted to the wheel member;
a spiral reinforcing layer formed by spirally winding an element wire body in which one a plurality of cords parallel to each other are embedded in a covering body at an outer circumferential surface of the ring member;
a tread member surrounding an outer side, in a tire radial direction, of the spiral reinforcing layer; and
a communication device disposed adjacent to an end surface at one side of the element wire body in a tire circumferential direction.

### Advantageous Effects of Invention

According to one aspect of the disclosure, it is possible to ensure the width of a spiral belt with respect to a crown portion in a tire in which the spiral belt and an RF tag are disposed at the tire radial direction outer side of the crown portion of a tire frame member. According to another aspect of the disclosure, it is possible to suppress damage of a communication device in a non-pneumatic tire at the time of vehicle traveling.

### BRIEF DESCRIPTION OF DRAWINGS

Fig. 1 is a sectional view showing one side of a section along a tire width direction of a tire according to a first embodiment of the disclosure.
Fig. 2 is a plan view illustrating a spiral belt and a crown portion to show the surroundings of an RF tag included in the tire of Fig. 1.
Fig. 3 is a sectional view taken following the line 3X-3X in Fig. 2.
Fig. 4A is a plan view of the RF tag included in the tire of Fig. 1.
Fig. 4B is a side view of the RF tag of Fig. 4A.
Fig. 5 is a plan view of a spiral belt and a crown portion around an RF tag included in a tire according to another embodiment of the disclosure.

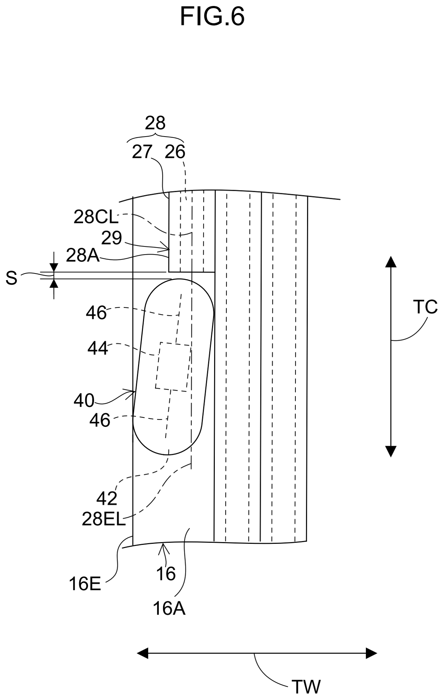

Fig. 6 is an enlarged plan view of a spiral belt and a crown portion around an RF tag included in a tire according to another embodiment of the disclosure.
Fig. 7 is a sectional view showing one side of a section along a tire width direction of a tire according to another embodiment of the disclosure.
Fig. 8 is a plan view illustrating a spiral belt and a crown portion to show the surroundings of an RF tag included in the tire of Fig. 7.
Fig. 9 is a side view of a non-pneumatic tire as a second embodiment of the disclosure.
Fig. 10 is an enlarged view of a part of Fig. 9.
Fig. 11 is a sectional view taken following the line I-I in Fig. 10.
Fig. 12 is a diagram showing a communication device illustrated in Fig. 9 and a reader/writer capable of wirelessly communicating with the communication device.
Fig. 13 is a view showing an example of the communication device illustrated in Fig. 9.
Fig. 14 is a perspective view showing a state in which the communication device illustrated in Fig. 13 is covered with a covering member.
Fig. 15 is a view showing a positional relationship between a communication device and an end surface at one side of an element wire body of a spiral reinforcing layer in a tire circumferential direction.

### DESCRIPTION OF EMBODIMENTS

### (First Embodiment)

Hereinafter, a first embodiment for carrying out the technology of the disclosure will be described with reference to the drawings. Constituent elements denoted by the same reference signs in the drawings mean the same or similar constituent elements. Note that overlapping descriptions and overlapping reference signs may be omitted in the embodiments described below. All of the drawings used in the following description are schematic, and a dimensional relationship among elements, a ratio among elements, and the like illustrated in a drawing do not necessarily coincide with actual ones. Dimensional relationships among elements, ratios among elements, and the like in a plurality of drawings also do not necessarily coincide with each other.

In the drawings, an arrow TC indicates a tire circumferential direction, an arrow TW indicates a tire width direction, and an arrow TR indicates a tire radial direction. Hereinafter, a side close to a tire rotational axis along a tire radial direction is referred to as "tire radial direction inner side", and a side far from the tire rotational axis following the tire radial direction is referred to as "tire radial direction outer side". Meanwhile, a side close to a tire equatorial plane CL along a tire width direction is referred to as "tire width direction inner side", and a side far from the tire equatorial plane CL following the tire width direction is referred to as "tire width direction outer side".

The dimension of each part is measured by the method described in the 2023 version YEAR BOOK issued by The Japan Automobile Tyre Manufacturers Association, Inc. (JATMA).

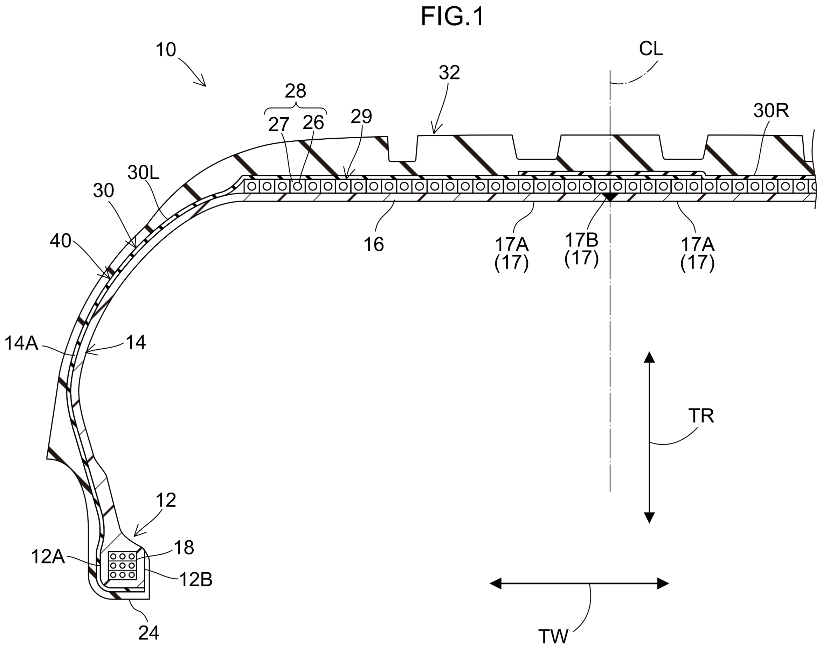

As shown in Fig. 1, a tire 10 of the present embodiment is a pneumatic tire used in a state of being filled with air, and has a sectional shape substantially similar to that of a conventional general pneumatic rubber tire (hereinafter, referred to as "rubber tire", if appropriate).

### (Tire Frame Member)

The tire 10 of the present embodiment includes a circular and resin-made tire frame member 17 that is a frame portion of the tire 10. The tire frame member 17 of the present embodiment is obtained by joining a pair of tire half parts 17A formed from a resin material with a bonding member 17B at a tire equatorial plane CL.

The tire frame member 17 includes a pair of bead portions 12 disposed at an interval in a tire width direction, a side portion 14 continuous with the tire radial direction outer side of one bead portion 12, and a crown portion 16 continuous with the tire width direction inner side of each side portion 14 and connecting tire radial direction outer side ends of the side portions 14. The circumferential direction, the width direction, and the radial direction of the tire frame member 17 correspond to the tire circumferential direction, the tire axial direction, and the tire radial direction, respectively.

The tire frame member 17 is formed from the resin material as a main raw material. The resin material does not contain vulcanized rubber. Examples of the resin material include thermoplastic resins (including thermoplastic elastomers), thermosetting resins, other general-purpose resins, and engineering plastics (including super engineering plastics).

The thermoplastic resins (including thermoplastic elastomers) refer to polymer compounds containing a material that softens and flows with an increase in temperature, and becomes relatively hard and strong when cooled. In the present description, among these, polymer compounds containing a material that softens and flows with an increase in temperature, becomes relatively hard and strong when cooled, and has rubber-like elasticity are referred to as thermoplastic elastomers, and polymer compounds containing a material that softens and flows with an increase in temperature, becomes relatively hard and strong when cooled, and does not have rubber-like elasticity are referred to as thermoplastic resins that are not elastomers, for distinction.

Examples of the thermoplastic resins (including thermoplastic elastomers) include polyolefin-based thermoplastic elastomers (TPOs), polystyrene-based thermoplastic elastomers (TPSs), polyamide-based thermoplastic elastomers (TPAs), polyurethane-based thermoplastic elastomers (TPUs), polyester-based thermoplastic elastomers (TPCs), dynamically crosslinked thermoplastic elastomers (TPVs), polyolefin-based thermoplastic resins, polystyrene-based thermoplastic resins, polyamide-based thermoplastic resins, and polyester-based thermoplastic resins.

As the thermoplastic material, for example, a material can be used that has a deflection temperature under load (under a load of 0.45 MPa) specified in ISO75-2 or ASTM D648 of 78°C or higher, a tensile yield strength specified in JIS K7113 of 10 MPa or more, a tensile fracture elongation specified in JIS K7113 of 50% or more, and a Vicat softening temperature (method A) specified in JIS K7206 of 130°C.

The thermosetting resins refer to polymer compounds that form a three-dimensional network structure with an increase in temperature and cure. Examples of the thermosetting resins include a phenol resin, an epoxy resin, a melamine resin, and a urea resin.

As the resin material, the thermoplastic resins (including thermoplastic elastomers) and the thermosetting resins described above may be used, and in addition, general-purpose resins may be used such as (meth)acrylic resins, EVA resins, vinyl chloride resins, fluorine-based resins, and silicone-based resins.

The tire frame member 17 may be formed from a single resin material, or portions (the bead portion 12, the side portion 14, the crown portion 16, and the like) of the tire frame member 17 may be formed from resin materials having different characteristics.

The bead portion 12 is a portion to be engaged with a standard rim via covering rubber 24, and a circular bead core 18 extending following the tire circumferential direction is embedded in the bead portion 12. The bead core 18 includes a bead cord (not illustrated) such as a metal cord (for example, a steel cord), an organic fiber cord, a resin-covered organic fiber cord, or a hard resin. The bead core 18 may be omitted as long as the rigidity of the bead portion 12 can be sufficiently ensured.

As shown in Fig. 1, the side portion 14 is a portion constituting a side portion of the tire 10, and is gently curved so as to protrude to the tire width direction outer side from the bead portion 12 toward the crown portion 16.

The crown portion 16 is a portion supporting a tread 32, which is described below, provided on the tire radial direction outer side, and an outer surface 16A is substantially flat following the tire width direction.

### (Spiral Belt)

A spiral belt 29 is provided on the tire radial direction outer side of the crown portion 16. The spiral belt 29 is formed by spirally winding a resin-covered cord 28 (an example of a covered cord in the disclosure) in which one reinforcing cord 26 or a plurality of reinforcing cords 26 are covered with a resin 27 in the tire circumferential direction. In the present embodiment, the spiral belt 29 includes the resin-covered cord 28 in which one reinforcing cord 26 is covered with the resin 27, but the disclosure is not limited to this configuration.

### (Reinforcing Layer)

The tire frame member 17 has an outer surface on which a reinforcing layer 30 is disposed. The reinforcing layer 30 extends from the tire radial direction inner side of the bead core 18 toward the tire radial direction outer side following the outer surface of the tire frame member 17, and further extends to the tire radial direction inner side of the bead core 18 on the opposite side beyond the tire equatorial plane CL.

The reinforcing layer 30 includes a plurality of reinforcing cords (not illustrated) covered with rubber (not illustrated). The reinforcing cords of the reinforcing layer 30 are organic fiber monofilaments (single wires) or multi filaments (stranded wires) obtained by twisting organic fibers, and each extend in the radial direction and are arranged parallel to each other in the tire circumferential direction. The reinforcing cords of the reinforcing layer 30 may be inclined at an angle of 10° or less with respect to the tire radial direction in a tire side view.

The reinforcing layer 30 of the present embodiment is formed by bonding a ply 30L and a ply 30R, which are described below, in which a plurality of reinforcing cords arranged parallel to each other are covered with rubber (unvulcanized), to the outer circumferential surface of the molded tire frame member 17. Specifically, at least an outer surface 14A of the side portion 14 is covered with the reinforcing layer 30.

Examples of the usable reinforcing cord of the reinforcing layer 30 include polyester cords, nylon cords, PET cords, and aromatic polyamide cords. A metal such as steel may be used as a material of the reinforcing cord of the reinforcing layer 30. The reinforcing layer 30 may be formed by covering the reinforcing cords with a resin instead of rubber.

### (Tread)

On the tire radial direction outer side of the reinforcing layer 30, the rubber tread 32 is disposed. The tread 32 covers the tire radial direction outer side portion of the reinforcing layer 30. The rubber material contained in the tread 32 is similar to tread rubber of a conventional general pneumatic tire or tread rubber for a retreaded tire. The tread 32 has a road surface contact surface on which a tread pattern (not illustrated) is formed.

### (Covering Rubber)

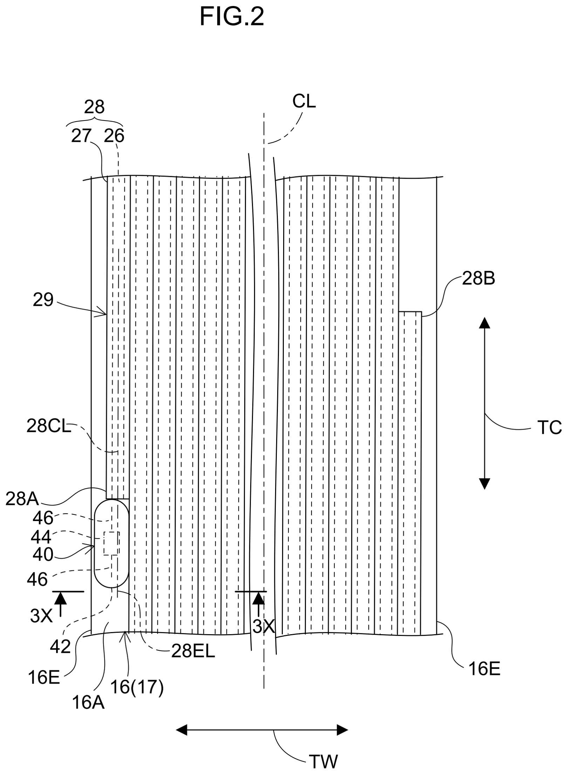

As shown in Figs. 1 and 2, on the outer surface of the reinforcing layer 30 attached to the tire frame member 17, covering rubber 24 is provided from the outer surface 14A on the tire outer side of the side portion 14 to an inner surface 12B on the tire inner side of the bead portion 12. Specifically, the covering rubber 24 is folded back from the outer surface 14A of the side portion 14 to the inner surface 12B side of the bead portion 12 via an outer surface 12A of the bead portion 12.

The outer side end portion on the tire radial direction outer side of the covering rubber 24 is joined (vulcanized and adhered) to the tread 32 and the tire frame member 17, in a state of being sandwiched between the reinforcing layer 30 attached to the tire frame member 17 and the outer side end portion of the tire width direction outer side of the tread 32. In the present embodiment, the entire outer surface of the reinforcing layer 30 attached to the tire frame member 17 is covered with the tread 32 and the covering rubber 24.

As the rubber material contained in the covering rubber 24, a rubber material is used that has higher weather resistance and a higher sealing property with a standard rim than the tire frame member 17. The rubber material contained in the covering rubber 24 is similar to a rubber material used in a sidewall and a bead portion of a conventional general pneumatic rubber tire.

### (RF Tag)

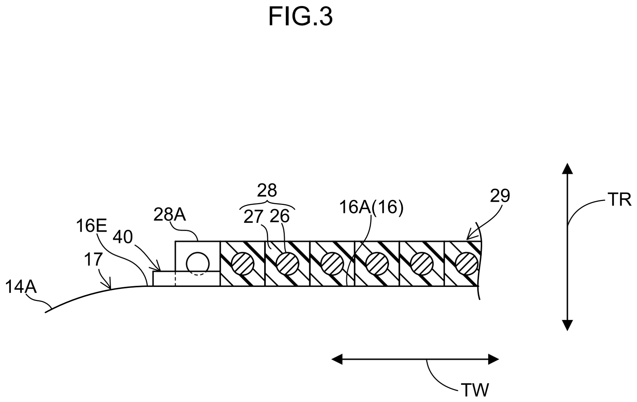

As shown in Figs. 2 and 3, the tire 10 includes an RF tag (also referred to as "RFID tag") 40. The RF tag 40 is configured to be capable of wirelessly communicating with a reader (not illustrated).

As shown in Fig. 3, the RF tag 40 is disposed at the tire radial direction outer side of the crown portion 16. Specifically, the RF tag 40 is attached to the outer surface 16A of the crown portion 16. In the present embodiment, for example, the RF tag 40 is welded to the outer surface 16A of the crown portion 16.

As shown in Fig. 2, the RF tag 40 is disposed at least partially on an extended line 28EL, of the resin-covered cord 28, extending from one end portion 28A of the resin-covered cord 28 in a plan view. The extended line 28EL herein is a straight line extending from a center line 28CL passing through the center of the resin-covered cord 28. The resin-covered cord 28 is spirally wound, and therefore the center line 28CL may be inclined at a slight angle with respect to the tire circumferential direction.

The RF tag 40 disposed in a vicinity of the one end portion 28A of the resin-covered cord 28 in a plan view. Here, the state of being close herein includes a state in which the RF tag 40 is in contact with an end surface of the one end portion 28A of the resin-covered cord 28 and a state in which a gap S between the end surface of the one end portion 28A of the resin-covered cord 28 and the RF tag 40 is 1 mm or less. In the present embodiment, as shown in Fig. 2, the RF tag 40 is in contact with the end surface of the one end portion 28A of the resin-covered cord 28 in a plan view. A case 42, described below, of the RF tag 40 may be attached to a portion including the resin 27 in the end surface of the one end portion 28A of the resin-covered cord 28. For example, the case 42 of the RF tag 40 may be welded to a portion including the resin 27 in the end surface of the one end portion 28A of the resin-covered cord 28.

The RF tag 40 is disposed so that a longitudinal side of the RF tag 40 is following the extended line 28EL in a plan view.

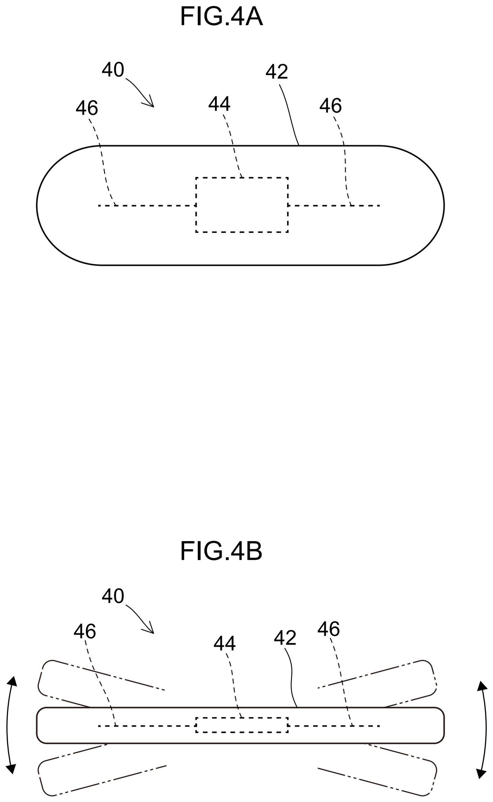

As shown in Figs. 4A and 4B, the RF tag 40 includes a resin case 42 having flexibility, and an RFID chip 44 and an antenna 46 housed in the case 42. In the present embodiment, a pair of antennas 46 extend in opposite directions from the RFID chip 44. Specifically, the pair of antennas 46 extend in opposite directions along a longitudinal side of the RF tag 40. In the present embodiment, the case 42 is formed from the same kind of resin material as the resin material forming the crown portion 16 of the tire frame member 17. As described above, the case 42 is welded to the outer surface 16A of the crown portion 16. The case 42 of the present embodiment has a plate shape and has a substantially quadrangular shape in which short sides are curved in an arc shape in a plan view, but the shape of the case 42 is not limited to this substantially quadrangular shape. For example, the case 42 may have a film shape.

Next, a functional effect of the present embodiment will be described.

In the tire 10 of the present embodiment, the RF tag 40 is disposed at least partially on the extended line 28EL extending from the one end portion 28A of the resin-covered cord 28 in a plan view of the spiral belt 29 illustrated in Fig. 2. As a result of disposing the RF tag 40 in this manner, the amount of protrusion of the RF tag 40 from the one end portion 28A of the resin-covered cord 28 toward the tire width direction outer side is reduced, so that the resin-covered cord 28 can be disposed close to an end portion 16E of the crown portion 16 in the tire width direction. Therefore, in the tire 10 of the present embodiment, for example, the resin-covered cord 28 can be disposed closer to the end portion 16E of the crown portion 16 in the tire width direction than in a case in which the RF tag 40 is disposed at a side of an end portion of the resin-covered cord 28, and thus the width of the spiral belt 29 with respect to the crown portion 16 (that is, the width following the tire width direction) can be ensured. As a result, in the tire 10, the tire rigidity can be improved by the spiral belt 29 while the RF tag 40 is disposed at the crown portion 16.

In the present embodiment, in the tire 10, the end portion 16E of the crown portion 16 in the tire width direction is a boundary (inflection point) between the substantially flat outer surface 16A of the crown portion 16 and the curved outer surface 14A of the side portion 14, but the disclosure is not limited to this configuration, and an end portion of the crown portion in the tire width direction may be set according to a specification of the tire.

In the tire 10 of the present embodiment, the RF tag 40 disposed in a vicinity of the one end portion 28A of the resin-covered cord 28. That is, in the tire 10, the RF tag 40 is disposed so as to be close to the one end portion 28A of the resin-covered cord 28 in a plan view. Here, the interval (interval following the tire width direction) from the side surface of the spiral belt 29 to the end portion 16E of the crown portion 16 decreases over one tire circumference from the tip of the one end portion 28A of the resin-covered cord 28. Therefore, in the case of disposing the RF tag 40 on the extended line 28EL extending from the one end portion 28A of the resin-covered cord 28 so as to be close to the one end portion 28A, for example, the resin-covered cord 28 can be disposed closer to the end portion 16E of the crown portion 16 than in a case in which the RF tag 40 is disposed at a position apart from the one end portion 28A of the resin-covered cord 28. Thus, the width of the spiral belt 29 with respect to the crown portion 16 can be further ensured.

In the tire 10 of the present embodiment, the RF tag 40 is disposed so that the longitudinal side of the RF tag 40 is following the extended line 28EL in a plan view. Therefore, the amount of protrusion of the RF tag 40 from the one end portion 28A of the resin-covered cord 28 toward the tire width direction outer side is smaller than in a case in which, for example, the RF tag 40 is disposed so that the longitudinal side of the RF tag 40 is orthogonal to the extended line 28EL, and thus the resin-covered cord 28 can be disposed close to the end portion 16E of the crown portion 16. Thus, the width of the spiral belt 29 with respect to the crown portion 16 can be further ensured.

In the tire 10 of the present embodiment, the reinforcing cord 26 is covered with the resin 27, and thus the tire weight can be reduced. The tire frame member 17 is formed from a resin material, and thus the tire weight can be further reduced. Furthermore, the recycling properties of the spiral belt 29 and the tire frame member 17 are improved.

In the tire 10 of the present embodiment, the case 42 housing the RFID chip 44 and the antenna 46 is welded to the crown portion 16 of the tire frame member 17, and thus the RF tag 40 can be easily and firmly attached to the tire frame member 17.

Furthermore, in the tire 10 of the present embodiment, the resin material forming the case 42 of the RF tag 40 is the same kind as the resin material forming the tire frame member 17, and thus the case 42 can be more firmly attached to the crown portion 16 than in a configuration in which, for example, the case 42 and the tire frame member 17 are formed from different kinds of resin materials.

### [Other Embodiments]

Although an example of the embodiment of the disclosure is described above, the embodiment of the disclosure is not limited to the above, and it is a matter of course that various modifications can be made in addition to the above without departing from the gist of the disclosure.

In the tire 10 of the above-described embodiment, the RF tag 40 is disposed so that the longitudinal side of the RF tag 40 is following the extended line 28EL, but, for example, the RF tag 40 may be disposed so that the longitudinal side of the RF tag 40 is inclined with respect to the extended line 28EL. The inclination angle of the longitudinal side of the RF tag 40 with respect to the extended line 28EL is preferably within a range of ±15 degrees. A gap S may be present between the RF tag 40 and the one end portion 28A of the resin-covered cord 28. The gap S is preferably 5 mm or less, and more preferably 3 mm or less.

In the tire 10 of the above-described embodiment, the RF tag 40 is disposed at the extended line 28EL extending from the one end portion 28A of the resin-covered cord 28, but the disclosure is not limited to this configuration, and the RF tag 40 may be disposed at the extended line extending from the other end portion 28B of the resin-covered cord 28, in addition to the extended line 28EL extending from the one end portion 28A of the resin-covered cord 28.

In the tire 10 of the above-described embodiment, the RF tag 40 is welded to the outer surface 16A of the crown portion 16, but the disclosure is not limited to this configuration, and a configuration may be adopted in which a part or the whole of the RF tag 40 is housed in a recess (not illustrated) formed in the outer surface 16A of the crown portion 16. As a result of housing the RF tag 40 in the recess as described above, the amount of protrusion of the RF tag 40 from the outer surface 16A of the crown portion 16 toward the tire radial direction outer side is reduced, and even in a case in which a crack or the like occurs in the tread 32, the influence of the crack is less likely to reach the RF tag 40.

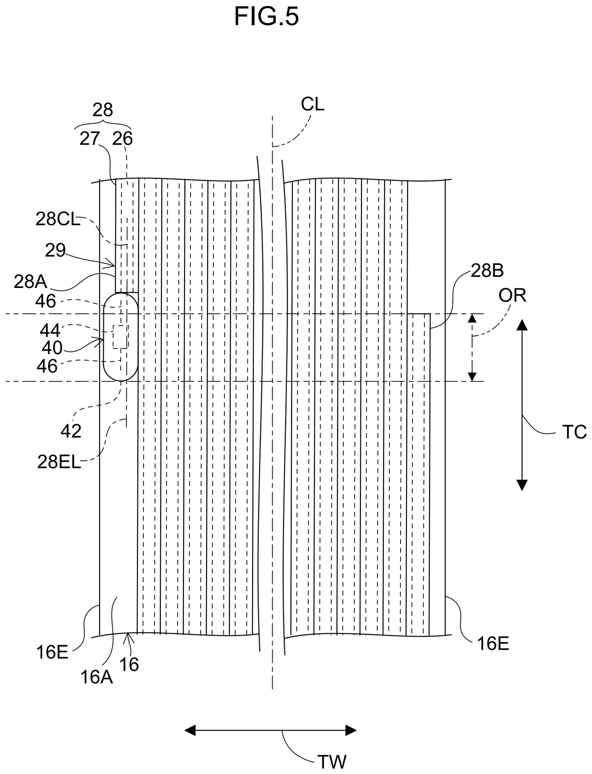

In the tire 10 of the above-described embodiment, as shown in Fig. 1, the one end portion 28A and the other end portion 28B of the resin-covered cord 28 overlap with each other in the tire circumferential direction, but the disclosure is not limited to this configuration. For example, as shown in Fig. 5, the one end portion 28A and the other end portion 28B of the resin-covered cord 28 may not overlap with each other in the tire circumferential direction, and instead, the RF tag 40 and the other end portion 28B of the resin-covered cord 28 may overlap with each other in the tire circumferential direction. In Fig. 5, a region in which the one end portion 28A and the other end portion 28B of the resin-covered cord 28 overlap with each other in the tire circumferential direction is indicated by the reference sign OR. Thus, in a case in which the RF tag 40 and the other end portion 28B of the resin-covered cord 28 overlap with each other in the tire circumferential direction, the RF tag 40 reinforces a portion with a narrow width of the spiral belt 29, which is a portion in which the spiral belt 29 has a narrow width in a case in which the one end portion 28A and the other end portion 28B of the resin-covered cord 28 do not overlap with each other, and therefore the rigidity of the spiral belt 29 can be ensured as compared with a case in which, for example, the portion is not reinforced.

In the above-described embodiment, the RF tag 40 is welded to the outer surface 16A of the crown portion 16, but the disclosure is not limited to this configuration, and the RF tag 40 may be adhered to the outer surface 16A of the crown portion 16 using an adhesive.

In the above-described embodiment, the resin material forming the case 42 and the resin material forming the crown portion 16 of the tire frame member 17 are the same kind of resin material, but the disclosure is not limited to this configuration, and the resin material forming the case 42 and the resin material forming the crown portion 16 of the tire frame member 17 may be different kinds of resin materials.

In the above-described embodiment, the configuration is adopted in which the reinforcing layer 30 includes a plurality of reinforcing cords (not illustrated) covered with rubber (not illustrated), but the disclosure is not limited to this configuration. A configuration may be adopted in which the reinforcing layer 30 includes a plurality of reinforcing cords (not illustrated) covered with a resin material (not illustrated).

At the time of manufacturing the tire 10, the RF tag 40 may be attached to the outer surface 16A of the crown portion 16 after formation of the spiral belt 29 on the tire frame member 17, or may be attached to the outer surface 16A of the crown portion 16 before formation of the spiral belt 29.

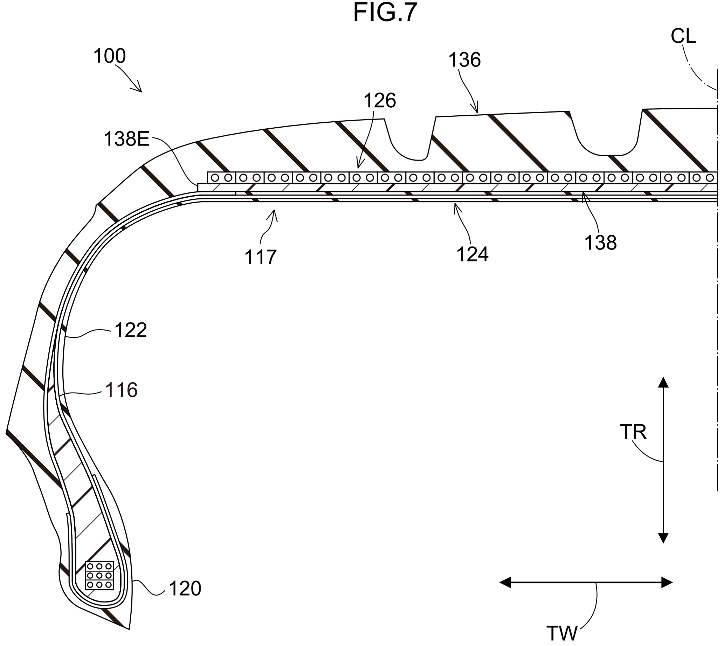

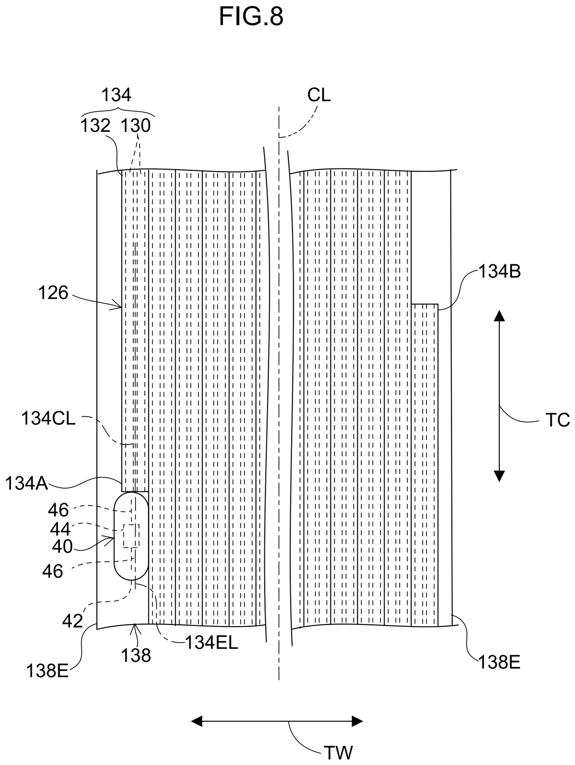

In the above-described embodiment, the tire frame member 17 contains a resin material, but the disclosure is not limited to this configuration. For example, as in a tire 100 shown in Figs. 7 and 8, the tire frame member may be formed from a material containing vulcanized rubber. Specifically, the tire 100 is, for example, a so-called radial tire to be used in a passenger car, and includes a tire frame member 117, a spiral belt 126, and the RF tag 40. Fig. 7 shows a shape of the tire 100 in a natural state before being filled with air. The tire frame member 117 includes a bead portion 120, a side portion 122, and a crown portion 124. Furthermore, the tire frame member 117 includes a carcass 116 including vulcanized rubber and a reinforcing cord, and a circular base ring 138 formed from a resin material. The crown portion 124 of the tire frame member 117 includes a central portion of the carcass 116 and the base ring 138 disposed at the circumference of the central portion. In the tire 100, an end portion 138E on the tire width direction outer side of the base ring 138 corresponds to the end portion on the tire width direction outer side of the crown portion 124, and the outer surface of the base ring 138 corresponds to the outer surface of the crown portion 124. As the resin material contained in the base ring 138, the same kind of resin material as a resin 132 contained in the spiral belt 126 may be used. The spiral belt 126 is attached (welded, for example) to the outer surface of the base ring 138. As shown in Fig. 7, the spiral belt 126 is formed by winding a resin-covered cord 134 (an example of a covered cord in the disclosure) in which a plurality of (for example, two) reinforcing cords 130 are covered with the resin 132 in the tire circumferential direction. The material contained in the spiral belt 126 may be the same as the material contained in the spiral belt 29. As shown in Fig. 8, the RF tag 40 is disposed at an extended line 134EL extending from one end portion 134A of the resin-covered cord 134. The RF tag 40 is attached to the base ring 138 included in the crown portion 124. On the tire radial direction outer side of the spiral belt 126, a tread 136 containing a rubber material is disposed. In the tire 100, the tire frame member 117 is formed from a material containing vulcanized rubber, but a functional effect can be obtained that is similar to that of the tire 10 of the above-described embodiment in which the tire frame member 17 is formed of a resin material. The reference sign 134B denotes the other end portion of the resin-covered cord 134.

In the tire 10 of the above-described embodiment, the spiral belt 29 is formed by spirally winding the resin-covered cord 28 in which one reinforcing cord 26 or a plurality of reinforcing cords 26 are covered with the resin 27 in the tire circumferential direction, but the disclosure is not limited to this configuration. For example, a spiral belt (not illustrated) may be formed by spirally winding a rubber-covered cord (not illustrated) in which one reinforcing cord 26 or a plurality of reinforcing cords 26 are covered with rubber in the tire circumferential direction. Even in this case, a functional effect similar to that of the above-described tire 10 can be obtained. The configuration using a rubber-covered cord instead of a resin-covered cord may be applied to the above-described tire 100.

### (Second Embodiment)

Hereinafter, an embodiment of the non-pneumatic tire according to the disclosure will be illustratively described with reference to the drawings. In the drawings, the same components are denoted by the same reference signs. Hereinafter, the direction parallel to a tire center axis O of the non-pneumatic tire is referred to as "tire width direction A". Hereinafter, a direction around the tire center axis O of the non-pneumatic tire is referred to as "tire circumferential direction B". Hereinafter, in a section orthogonal to the tire center axis O of the non-pneumatic tire, a radial direction of a virtual circle having a center on the tire center axis O is referred to as "tire radial direction C".

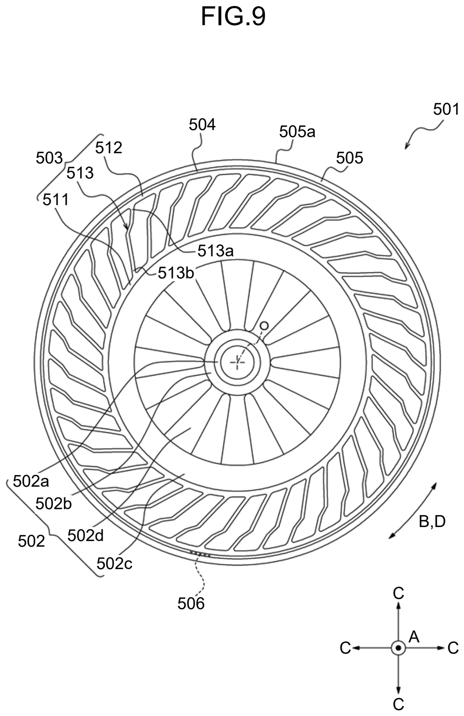

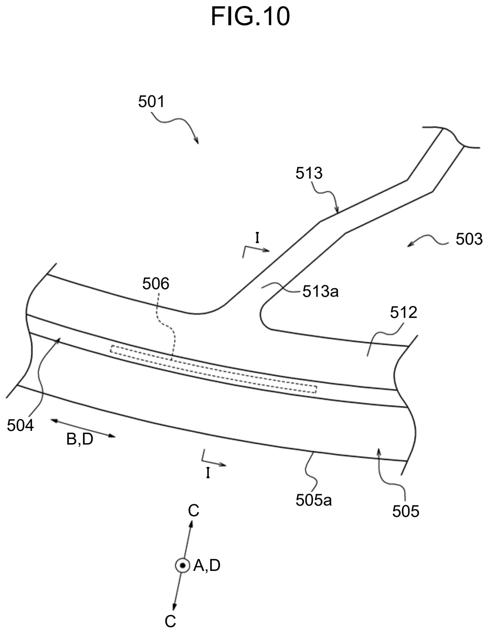

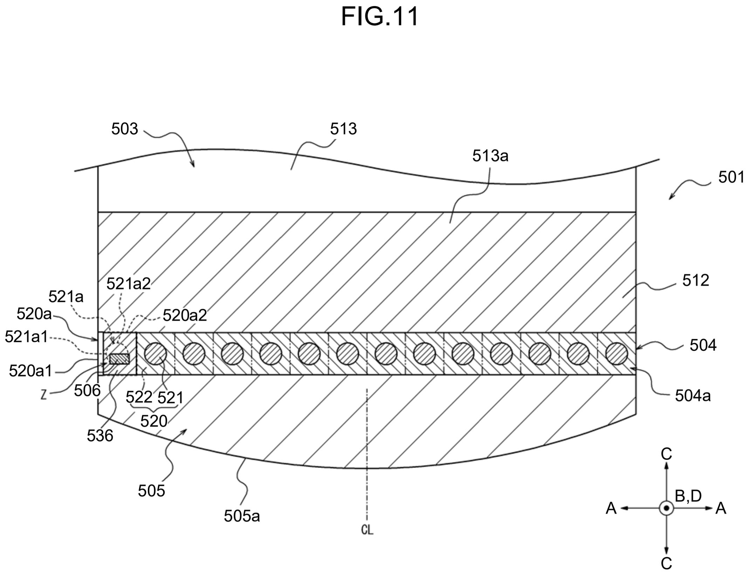

Fig. 9 is a side view of a non-pneumatic tire 501 as one embodiment of the non-pneumatic tire according to the disclosure. Fig. 10 is an enlarged view of a part of Fig. 9. Fig. 11 is a sectional view taken following the line I-I in Fig. 10.

As shown in Fig. 9, the non-pneumatic tire 501 of the present embodiment includes a wheel member 502, a ring member 503, a spiral reinforcing layer 504, a tread member 505, and a communication device 506. The non-pneumatic tire 501 is used in a state of being fitted to an axle of various vehicles such as a bicycle, a two-wheeled vehicle, and an automobile.

As shown in Fig. 9, the wheel member 502 is formed into a disk shape. Each of the ring member 503, the spiral reinforcing layer 504, and the tread member 505 is formed into a circular shape. The center axis of the wheel member 502, the center axis of the ring member 503, the center axis of the spiral reinforcing layer 504, and the center axis of the tread member 505 are located on a common axis. In the present embodiment, the common axis is the tire center axis O.

In the present embodiment, the central positions of the wheel member 502, the ring member 503, the spiral reinforcing layer 504, and the tread member 505 in the tire width direction A substantially coincide with each other. The wheel member 502, the ring member 503, the spiral reinforcing layer 504, and the tread member 505 of the present embodiment as a whole have a symmetrical structure in the tire width direction A with respect to the tire equatorial plane CL (see Fig. 11) passing through the central position in the tire width direction A, but are not limited to this configuration.

The wheel member 502 is configured to be attachable to an axle. Specifically, the wheel member 502 of the present embodiment includes a tubular boss 502a extending in the tire width direction A and to which an axle is fitted, a fitting tubular portion 502b fixed to the outer circumferential surface of the boss 502a, a support tubular portion 502c surrounding the outer side of the fitting tubular portion 502b in the tire radial direction C and supporting the ring member 503 on the outer circumferential surface, and a plurality of spokes 502d connecting the fitting tubular portion 502b and the support tubular portion 502c.

Each of the boss 502a, the fitting tubular portion 502b, and the support tubular portion 502c is disposed so that the center axis is located on the tire center axis O. The plurality of spokes 502d are disposed, for example, at equal intervals in the tire circumferential direction B. Each of the plurality of spokes 502d radially extends in the tire radial direction C about the boss 502a.

For example, the boss 502a, the fitting tubular portion 502b, the support tubular portion 502c, and the plurality of spokes 502d may be made of a metal such as an aluminum alloy. The boss 502a, the fitting tubular portion 502b, the support tubular portion 502c, and the plurality of spokes 502d may be made of a resin such as a thermoplastic resin. Alternatively, some of the boss 502a, the fitting tubular portion 502b, the support tubular portion 502c, and the plurality of spokes 502d may be made of a metal, and the others may be made of a resin. As described above, the material of each constituent element of the wheel member 502 is not particularly limited.

The ring member 503 is fitted to the wheel member 502. More specifically, the ring member 503 of the present embodiment is externally fitted to the support tubular portion 502c of the wheel member 502 and supported on the outer circumferential surface of the support tubular portion 502c.

The ring member 503 includes an inner tubular body 511, an outer tubular body 512, and a connecting member 513.

The inner tubular body 511 is fixed to the wheel member 502. Specifically, the inner tubular body 511 of the present embodiment is externally fitted to the support tubular portion 502c of the wheel member 502 and supported by the outer circumferential surface of the support tubular portion 502c in the entire region in the tire circumferential direction B. In this state, the inner tubular body 511 of the present embodiment is joined to the support tubular portion 502c with a fastening member such as a bolt, and thus fixed to the support tubular portion 502c. The inner tubular body 511 is attached to an axle via the wheel member 502.

The outer tubular body 512 surrounds the outer side of the inner tubular body 511 in the tire radial direction C. The center axis of the inner tubular body 511 and the center axis of the outer tubular body 512 are located on the tire center axis O. The inner tubular body 511 and the outer tubular body 512 of the present embodiment are disposed in a state in which the central portions in the tire width direction A coincide with each other.

The connecting member 513 connects the inner tubular body 511 and the outer tubular body 512. The connecting member 513 is configured to be elastically deformable between the inner tubular body 511 and the outer tubular body 512. More specifically, the connecting member 513 is configured to be elastically deformable in the tire radial direction C between the inner tubular body 511 and the outer tubular body 512.

As shown in Fig. 9, a plurality of the connecting members 513 of the present embodiment are disposed in the tire circumferential direction B. More specifically, the plurality of the connecting members 513 of the present embodiment are disposed in the tire circumferential direction B at positions between the inner tubular body 511 and the outer tubular body 512 in the tire radial direction C. The plurality of the connecting members 513 are disposed apart from each other in the tire circumferential direction B. That is, two connecting members 513 adjacent to each other in the tire circumferential direction B are not in contact with each other, and are disposed apart from each other in the tire circumferential direction B. The plurality of the connecting members 513 of the present embodiment are disposed so as to be point-symmetrical with each other with respect to the tire center axis O.

Each connecting member 513 of the present embodiment is a plate-shaped portion disposed so that the thickness direction of the connecting member 513 is an in-plane direction of a plane orthogonal to the tire center axis O. In the connecting member 513 of the present embodiment, an outer end portion 513a on the outer side in the tire radial direction C connected to the outer tubular body 512 and an inner end portion 513b on the inner side in the tire radial direction C connected to the inner tubular body 511 are disposed at different positions in the tire circumferential direction B. Thus, the plate-shaped portion as the connecting member 513 can be used as a plate spring that easily elastically deforms in the tire radial direction C. However, the configuration of the connecting member 513 is not limited to the configuration of the present embodiment.

The constituent materials of the inner tubular body 511, the outer tubular body 512, and the connecting member 513 are not particularly limited. The inner tubular body 511, the outer tubular body 512, and the connecting member 513 of the present embodiment are made of a resin. The inner tubular body 511, the outer tubular body 512, and the connecting member 513 are preferably made of a resin from the viewpoint of weight reduction. Examples of a resin material that can be used as a constituent material of the inner tubular body 511, the outer tubular body 512, and the connecting member 513 include thermoplastic resins such as polyesters and nylons, thermosetting resins such as vinyl ester resins and unsaturated polyester resins, and other synthetic resins. The resin material may further contain fibers of glass, carbon, graphite, aramid, polyethylene, a ceramic, or the like as reinforcing fibers.

In the present embodiment, the inner tubular body 511, the outer tubular body 512, and the connecting member 513 are integrally formed by injection molding using a resin material. The injection molding may be a method of integrally molding the whole of the inner tubular body 511, the outer tubular body 512, and the connecting member 513 at the same time. The resin material may be, for example, only one kind of resin material, a mixture containing two or more kinds of resin materials, or a mixture containing one or more kinds of resin materials and one or more kinds of elastomers. The resin material may further contain, for example, an additive such as an antiaging agent, a plasticizer, a filler, or a pigment. The resin material is preferably a thermoplastic resin. Note that the inner tubular body 511, the outer tubular body 512, and the connecting member 513 may be formed separately and assembled.

The wheel member 502 has a function of connecting an axle and the ring member 503, and the ring member 503 has a function of absorbing vibration transmitted from the ground to the axle. As described above, the wheel member 502 and the ring member 503 have different functions, and therefore they may be formed from different materials. For example, the ring member 503 may be formed from a material having a relatively small elastic modulus in order to ensure vibration absorption performance, and the wheel member 502 may be formed from a material having a larger elastic modulus than the ring member 503 in order to ensure robustness.

The ring member 503 of the present embodiment includes the inner tubular body 511, the outer tubular body 512, and the connecting member 513 described above, but is not limited to this configuration. The ring member 503 may further include another portion in addition to the inner tubular body 511, the outer tubular body 512, and the connecting member 513.

The spiral reinforcing layer 504 is formed by spirally winding an element wire body 520 in which one cord 521 or a plurality of cords 521 parallel to each other are embedded in a covering body 522 on the outer circumferential surface of the outer tubular body 512 of the ring member 503. Fig. 11 shows the element wire body 520, as an example, in which only one cord 521 is embedded in the covering body 522.

The element wire body 520 is spirally wound on the outer circumferential surface of the outer tubular body 512, that is, the outer circumferential surface of the ring member 503, and thus the element wire body 520 is adjacent to itself in the tire width direction A on the outer circumferential surface of the outer tubular body 512. In the element wire body 520, portions of the covering body 522 adjacent to each other in the tire width direction A are integrally fixed in the tire width direction A, and thus the spiral reinforcing layer 504 is formed on the outer circumferential surface of the outer tubular body 512. For convenience of description, two-dot chain lines in Fig. 11 indicate boundaries between portions in the covering body 522 before the covering body 522 is fixed. In other words, the spiral reinforcing layer 504 includes a base layer 504a formed by fixing portions of the covering body 522 adjacent to each other in the tire width direction A, and one or more cords 521 spirally extending in the base layer 504a. The constituent material of the covering body 522 may be, for example, a resin material. The covering body 522 may be formed, for example, using a rubber composition. Examples of the cord 521 include a steel cord.

The spiral reinforcing layer 504 may be adhered to the outer circumferential surface of the outer tubular body 512 of the ring member 503 over the entire region in the tire circumferential direction B. The adhesion between the spiral reinforcing layer 504 and the outer tubular body 512 may be performed, for example, by welding the element wire body 520 forming the spiral reinforcing layer 504 to the outer circumferential surface of the outer tubular body 512. In a case in which the covering body 522 is formed from a rubber composition, the adhesion between the spiral reinforcing layer 504 and the outer tubular body 512 may be performed by vulcanized adhesion.

In the non-pneumatic tire 501 of the present embodiment, the spiral reinforcing layer 504 is provided, and thus the rigidity of the outer tubular body 512 of the ring member 503 can be enhanced. Thus, for example, even in the case of use in an environment in which the non-pneumatic tire 501 receives a large input from a road surface or a protrusion on a road surface sticks into the tread member 505 of the non-pneumatic tire 501, the durability of the non-pneumatic tire 501 can be improved.

The tread member 505 surrounds the outer side of the spiral reinforcing layer 504 in the tire radial direction C. More specifically, the tread member 505 is formed into a tubular shape, and covers the entire outer circumferential surface on the outer side of the outer tubular body 512 of the ring member 503 in the tire radial direction C from the outer side of the spiral reinforcing layer 504 in the tire radial direction C. The constituent material of the tread member 505 has a smaller elastic modulus than the constituent material of the ring member 503. The outer circumferential surface on the outer side of the tread member 505 in the tire radial direction C is a tread surface 505a of the non-pneumatic tire 501. As shown in Fig. 11, the tread surface 505a of the tread member 505 may be a curved surface in which the central side in the tire width direction A protrudes outward in the tire radial direction C compared with both end sides.

The tread member 505 is formed, for example, using vulcanized rubber obtained by vulcanizing a rubber composition containing natural rubber and the like, or using a thermoplastic material. Examples of the thermoplastic material include thermoplastic elastomers and thermoplastic resins. Examples of the thermoplastic elastomers include amide-based thermoplastic elastomers (TPAs), ester-based thermoplastic elastomers (TPCs), olefin-based thermoplastic elastomers (TPOs), styrene-based thermoplastic elastomers (TPSs), urethane-based thermoplastic elastomers (TPUs), thermoplastic rubber crosslinked bodies (TPVs), and other thermoplastic elastomers (TPZs) specified in JIS K 6418. Examples of the thermoplastic resins include urethane resins, olefin resins, vinyl chloride resins, and polyamide resins. The tread member 505 is preferably formed from vulcanized rubber from the viewpoint of abrasion resistance.

As shown in Figs. 9 to 11, at least a part of the communication device 506 is disposed in a region in which the spiral reinforcing layer 504 is located in the tire radial direction C. Specifically, as shown in Fig. 11, the communication device 506 is disposed at a position adjacent to the element wire body 520 of the spiral reinforcing layer 504 in the tire width direction A. As shown in Fig. 11, the communication device 506 is disposed adjacent to an end surface 520a on one side of the element wire body 520 of the spiral reinforcing layer 504 in the tire circumferential direction B. Here, the state of being "disposed adjacent" means not only a configuration in which two objects are disposed adjacent to each other in a state of being in contact with each other, but also a configuration in which two objects are disposed adjacent to each other in a state of being apart from each other and interposing a gap. Therefore, the communication device 506 may be disposed adjacent to the end surface 520a on the one side of the element wire body 520 of the spiral reinforcing layer 504 in the tire circumferential direction B in a state of interposing a gap of, for example, 5 mm or less. Fig. 11 illustrates the position of the end surface 520a on the one side of the element wire body 520, and illustrates an end surface 521a of the cord 521 in the end surface 520a by a broken line. In the case of disposing the communication device 506 at such a position, the circumference of the communication device 506 is protected by the ring member 503, the spiral reinforcing layer 504, and the tread member 505, and damage of the communication device 506 at the time of vehicle traveling can be suppressed. Fig. 11 shows a configuration in which a covering member 536 that is described below and covers the communication device 506 has a predetermined shape and is disposed at the position shown in Fig. 11, but the present invention is not limited to this configuration. For example, the communication device 506 may be configured to be embedded in the tread member 505 that flows during vulcanization molding and bulges inward in the tire radial direction C.

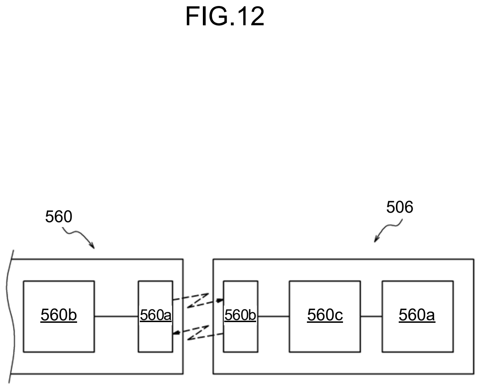

Fig. 12 is a diagram showing an RF tag as the communication device 506 of the present embodiment and a reader/writer 560 capable of wirelessly communicating with the RF tag. As shown in Fig. 12, the communication device 506 of the present embodiment may be a passive RF tag including a storage unit 506a that stores information regarding the non-pneumatic tire 501, an antenna unit 506b that can transmit and receive information to and from the reader/writer 560 located outer side the non-pneumatic tire 501, and a control unit 506c that can write information to the storage unit 506a and read information from the storage unit 506a. Specifically, in the RF tag as the communication device 506 of the present embodiment, the antenna unit 506b can receive information transmitted on a radio wave or a magnetic field from an antenna unit 560a of the reader/writer 560. Electric power is generated in the antenna unit 506b by rectification (in the case of a radio wave) or resonance (in the case of a magnetic field), and the storage unit 506a and the control unit 506c perform predetermined operations. For example, the control unit 506c reads information from the storage unit 506a, and returns (transmits) the information on a radio wave or a magnetic field from the antenna unit 506b to the reader/writer 560. The antenna unit 560a of the reader/writer 560 receives a radio wave or a magnetic field from the RF tag as the communication device 506 of the present embodiment. A control unit 560b of the reader/writer 560 extracts the received information, and thus can acquire the information stored in the storage unit 506a. The storage unit 506a and the control unit 506c described above can include, for example, an integrated circuit (IC chip) including a nonvolatile memory.

The information stored in the storage unit 506a of the RF tag as the communication device 506 of the present embodiment is not particularly limited. The storage unit 506a may be, for example, identification information that is unique to the non-pneumatic tire 501 and can specify each non-pneumatic tire, such as information of a manufacturer, a manufacturing factory, and a manufacturing date of the non-pneumatic tire 501. The storage unit 506a may store tire history information such as the travel distance of the non-pneumatic tire 501, the number of times of sudden braking, the number of times of sudden starting, and the number of times of sudden turning, as information that can be rewritten by the reader/writer 560. For example, a sensor that detects tire acceleration or the like may be attached to the non-pneumatic tire 501, and the storage unit 506a may store detection information detected by the sensor. The RF tag as the communication device 506 wirelessly communicates with the sensor through the antenna unit 506b, and thus can acquire the information detected by the sensor.

The communication device 506 only needs to be configured to be capable of wirelessly communicating with a predetermined device outer side the non-pneumatic tire 501, and is not limited to the RF tag of the present embodiment.

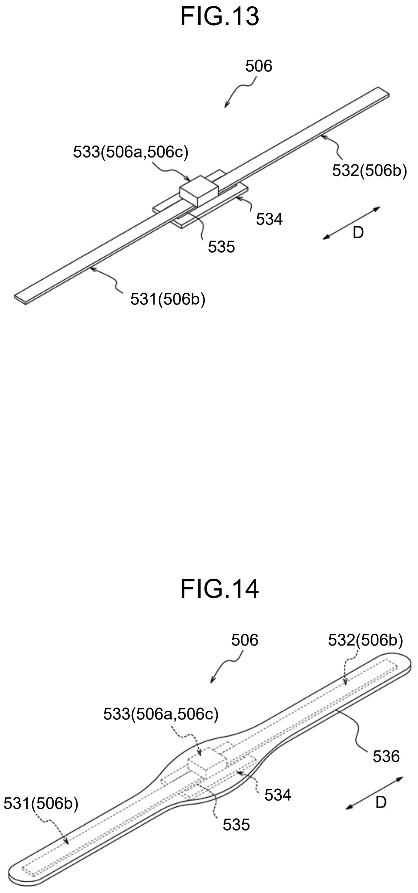

Figs. 13 and 14 are perspective views showing an RF tag as the communication device 506 of the present embodiment. As shown in Fig. 13, the RF tag as the communication device 506 of the present embodiment includes a first antenna 531 and a second antenna 532 included in the antenna unit 506b, an IC chip 533 included in the control unit 506c and the storage unit 506a and operated by an induced electromotive force generated by a radio wave received by the first antenna 531 and the second antenna 532, a plate-shaped support member 534 to which the IC chip 533 is attached, and a conductive conduction member 535 electrically connecting the IC chip 533 to each of the first antenna 531 and the second antenna 532. As shown in Fig. 13, the RF tag as the communication device 506 of the present embodiment includes the first antenna 531 and the second antenna 532 that are elongated and protrude from the IC chip 533 in directions opposite to each other to interpose the IC chip 533. As described above, the communication device 506 of the present embodiment has an elongated shape in which a longitudinal side D of the first antenna 531 and the second antenna 532 corresponds to a longitudinal side of the entire communication device 506. Fig. 14 is a perspective view showing a state in which the RF tag as the communication device 506 illustrated in Fig. 13 is covered with a covering member 536. The covering member 536 is formed from a resin. In the present embodiment, as shown in Fig. 14, the RF tag as the communication device 506 having the circumference covered with the covering member 536 is disposed in a region in which the spiral reinforcing layer 504 is located in the tire radial direction C.

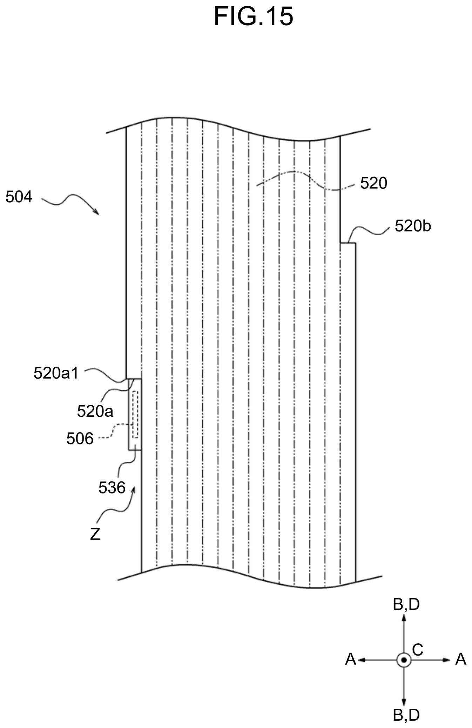

Hereinafter, details of the position and the posture in which the communication device 506 is disposed will be described with reference to Figs. 11 and 15. Fig. 15 is a view showing a positional relationship between the communication device 506 and the end surface 520a on the one side of the element wire body 520 of the spiral reinforcing layer 504 in the tire circumferential direction B.

As shown in Fig. 15, the communication device 506 is disposed adjacent to the end surface 520a on the one side of the element wire body 520 in the tire circumferential direction B. In other words, as shown in Figs. 11 and 15, the communication device 506 is disposed at a position overlapping the end surface 520a on the one side of the element wire body 520 in the tire circumferential direction B. As described above, the element wire body 520 forming the spiral reinforcing layer 504 is spirally wound on the outer circumferential surface of the ring member 503 (the outer circumferential surface of the outer tubular body 512, in the present embodiment). Therefore, the element wire body 520 is not disposed at each of positions adjacent to both end surfaces of the element wire body 520 in the tire circumferential direction B. Therefore, at each of the positions adjacent to both end surfaces of the element wire body 520 in the tire circumferential direction B, a space Z is formed that is surrounded by the spiral reinforcing layer 504 in the tire width direction A and the tire circumferential direction B and interposed between the outer circumferential surface of the ring member 503 and the tread member 505 in the tire radial direction C. The communication device 506 is disposed in the space Z. In the case of disposing the communication device 506 in the space Z, the circumference of the communication device 506 is protected by the ring member 503, the spiral reinforcing layer 504, and the tread member 505, and damage of the communication device 506 at the time of vehicle traveling can be suppressed.

The communication device 506 of the present embodiment is disposed adjacent to the end surface 520a of the element wire body 520 in the tire circumferential direction B, but may be disposed adjacent to an end surface 520b on the opposite side of the element wire body 520 in the tire circumferential direction B.

As shown in Figs. 11 and 15, in the present embodiment, the communication device 506 is entirely located, in the tire width direction A, at an inner side of an outer side end 520a1 of the end surface 520a on the one side of the element wire body 520. Thus, the communication device 506 does not protrude outward from the end surface 520a of the element wire body 520 in the tire width direction A, and therefore it is possible to suppress damage of the communication device 506 caused by an impact or the like from the outer side in the tire width direction A. In the present embodiment, as shown in Fig. 11, the covering member 536 covering the communication device 506 is located, in the tire width direction A, at the inner side of the outer side the outer side end 520a1 of the end surface 520a on the one side of the element wire body 520. Thus, it is possible to further suppress damage of the communication device 506 caused by an impact or the like in the tire width direction A.

As shown in Fig. 11, in the present embodiment, the communication device 506 is entirely located, in the tire width direction A, at an inner side of an outer side end 521al of the end surface 521a of the cord 521 in the end surface 520a on the one side of the element wire body 520. Thus, the communication device 506 does not protrude outward from the cord 521 of the element wire body 520 in the tire width direction A, and therefore it is possible to further suppress damage of the communication device 506 caused by an impact or the like from the outer side in the tire width direction A.

As shown in Fig. 11, in the present embodiment, the communication device 506 is entirely located, in the tire radial direction C, at an inner side of an outer side end 520a2 in the tire radial direction C of the end surface 520a on the one side of the element wire body 520. Thus, the communication device 506 does not protrude outward from the end surface 520a of the element wire body 520 in the tire radial direction C, and therefore it is possible to suppress damage of the communication device 506 caused via the tread member 505 by an impact or the like from the outer side in the tire radial direction C.

As shown in Fig. 11, in the present embodiment, the communication device 506 is entirely located, in the tire radial direction C, at an inner side of an outer side end 521a2 in the tire radial direction C of the end surface 521a of the cord 521 in the end surface 520a on the one side of the element wire body 520. Thus, the communication device 506 does not protrude outward from the cord 521 of the element wire body 520 in the tire radial direction C, and therefore it is possible to further suppress damage of the communication device 506 caused by an impact or the like from the outer side in the tire radial direction C.

As described above, the RF tag as the communication device 506 of the present embodiment has an elongated shape. As shown in Figs. 10, 11, and 15, the communication device 506 of the present embodiment is disposed so that a longitudinal side (a side in the same direction as the longitudinal side D of the first antenna 531 and the second antenna 532 and, hereinafter, referred to as "longitudinal side D" in the present embodiment) of the communication device 506 is following the tire circumferential direction B. The ring member 503 receives a force from a road surface at the time of vehicle traveling and deforms in the tire radial direction C. At this time, the variation in the deformation amount in the tire radial direction C due to the position in the tire circumferential direction B is larger than the variation in the deformation amount in the tire radial direction C due to the position in the tire width direction A. Therefore, in the case of disposing the elongated communication device 506 so that the longitudinal side D is following the tire circumferential direction B, a stress concentrates on a part of the longitudinal side D of the communication device 506, and local deformation, damage, breakage, or the like is likely to be caused. However, as described above, the communication device 506 is disposed adjacent to the spiral reinforcing layer 504 in the tire width direction A and the tire circumferential direction B in the space Z, and therefore deformation in the tire radial direction C is suppressed by the spiral reinforcing layer 504, and deformation, damage, breakage, or the like caused by stress concentration described above can be suppressed. In other words, in the case of disposing the communication device 506 in the above-described space Z, deterioration of the durability of the communication device 506 can be suppressed even in the case of disposing the communication device 506 so that the longitudinal side D is following the tire circumferential direction B.

The non-pneumatic tire according to the disclosure is not limited to the specific configurations shown in the above-described embodiments and modifications, and various modifications, changes, and combinations can be made without departing from the scope of the claims.

### [Contribution to sustainable development goals (SDGs) led by United Nations]

SDGs have been proposed to realize a sustainable society. An embodiment of the disclosure is considered to be a technology that can contribute to "No. 12 Responsible Consumption and Production", "No. 13 Climate Action", and the like.

Next, the following supplementary notes regarding the present embodiment will be disclosed.

### <Supplementary Note 1>

[1] A tire, including:
   a tire frame member including a bead portion, a side portion continuous with a tire radial direction outer side of the bead portion, and a crown portion continuous with a tire width direction inner side of the side portion, the tire frame member being circular;
   a spiral belt disposed at a tire radial direction outer side of the crown portion, the spiral belt being formed by spirally winding, in a tire circumferential direction, a covered cord comprising one or a plurality of reinforcing cords that are covered with a resin or rubber; and
   an RF tag disposed at the tire radial direction outer side of the crown portion, the RF tag being disposed at least partially on an extended line of the covered cord, the extended line extending from one end portion of the covered cord in a plan view.

In the tire of [1], the RF tag is disposed at least partially on the extended line, of the covered cord, extending from the one end portion of the covered cord in a plan view, and therefore the width of the spiral belt with respect to the crown portion can be ensured as compared with a case in which, for example, the RF tag is disposed at the side of the one end portion of the covered cord.

[2] The tire according to [1], in which the covered cord is formed by covering the one or the plurality of the reinforcing cords with a resin.

In the tire of [2], the reinforcing cord is covered with the resin, and thus the tire weight can be reduced.

[3] The tire according to [1] or [2], in which the RF tag is disposed in a vicinity of the one end portion of the covered cord.

In the tire of [3], the RF tag disposed in a vicinity of the one end portion of the covered cord, and therefore the width of the spiral belt with respect to the crown portion can be ensured as compared with a case in which, for example, the RF tag is apart from the one end portion of the covered cord.

[4] The tire according to any one of [1] to [3], in which the RF tag is disposed such that a longitudinal side of the RF tag follows the extended line in a plan view.

In the tire of [4], the RF tag is disposed so that the longitudinal side of the RF tag follows the extended line in a plan view, and therefore the width of the spiral belt with respect to the crown portion can be ensured as compared with a case in which, for example, the RF tag is disposed so that the longitudinal side of the RF tag is orthogonal to the extended line.

[5] The tire according to any one of [1] to [4], in which the RF tag and another end portion of the covered cord overlap with each other in the tire circumferential direction in a plan view.

In the tire of [5], the RF tag and the other end portion of the covered cord overlap with each other in the tire circumferential direction in a plan view, and therefore the rigidity of the spiral belt can be ensured as compared with a case in which, for example, the one end portion of the covered cord and the RF tag do not overlap the other end portion of the covered cord.

[6] The tire according to any one of [1] to [5], in which the tire frame member is formed from a resin material.

In the tire of [6], the tire frame member is formed from the resin material, and thus the tire weight can be reduced.

[7] The tire according to [6], in which:
the RF tag includes a resin case having flexibility, and an RFID chip and an antenna housed in the case, and
the case is welded to the crown portion.

In the tire of [7], the case housing the RFID chip and the antenna is welded to the crown portion, and thus the RF tag can be easily and firmly attached to the tire frame member.

### <Supplementary Note 2>

[1] A non-pneumatic tire, including:
   a wheel member attachable to an axle;
   a ring member fitted to the wheel member;
   a spiral reinforcing layer formed by spirally winding an element wire body in which one a plurality of cords parallel to each other are embedded in a covering body at an outer circumferential surface of the ring member;
   a tread member surrounding an outer side, in a tire radial direction, of the spiral reinforcing layer; and
   a communication device disposed adjacent to an end surface at one side of the element wire body in a tire circumferential direction.
[2] The non-pneumatic tire according to [1], in which the communication device is entirely located, in a tire width direction, at an inner side of an outer side end of the end surface at the one side of the element wire body.
[3] The non-pneumatic tire according to [2], in which the communication device is entirely located, in the tire width direction, at an inner side of an outer side end of an end surface of the one or the plurality of the cords in the end surface at the one side of the element wire body.
[4] The non-pneumatic tire according to any one of [1] to [3], in which the communication device is entirely located, in the tire radial direction, at an inner side of an outer side end in the tire radial direction of the end surface at the one side of the element wire body.
[5] The non-pneumatic tire according to [4], in which the communication device is entirely located, in the tire radial direction, at an inner side of an outer side end in the tire radial direction of an end surface of the one or the plurality of cords in the end surface at the one side of the element wire body.
[6] The non-pneumatic tire according to any one of [1] to [5], in which:
   the communication device has an elongated shape, and
   the communication device is disposed so as to have a longitudinal side following the tire circumferential direction.
[7] The non-pneumatic tire according to any one of [1] to [6], in which:
   the ring member includes:
   an inner tubular body fitted to the wheel member;
   an outer tubular body surrounding an outer side of the inner tubular body in the tire radial direction; and
   a connecting member connecting the inner tubular body and the outer tubular body and being elastically deformable between the inner tubular body and the outer tubular body, and
   the spiral reinforcing layer is formed by spirally winding the element wire body on an outer circumferential surface of the outer tubular body.
[8] The non-pneumatic tire according to any one of [1] to [7], wherein the communication device is an RF tag.

All documents, patent applications, and technical standards described herein are incorporated herein by reference to the same extent as in a case in which each document, patent application, and technical standard are specifically and individually stated to be incorporated herein by reference.

The disclosures of Japanese Patent Application No. 2023-209532 filed on December 12, 2023 and Japanese Patent Application No. 2023-210566 filed on December 13, 2023 are incorporated herein by reference in its entirety.

### Industrial Applicability

The disclosure relates to a tire and a non-pneumatic tire.

## Claims

1. A tire, comprising:
a tire frame member including a bead portion, a side portion continuous with a tire radial direction outer side of the bead portion, and a crown portion continuous with a tire width direction inner side of the side portion, the tire frame member being circular;
a spiral belt disposed at a tire radial direction outer side of the crown portion, the spiral belt being formed by spirally winding, in a tire circumferential direction, a covered cord comprising one or a plurality of reinforcing cords that are covered with a resin or rubber; and
an RF tag disposed at the tire radial direction outer side of the crown portion, the RF tag being disposed at least partially on an extended line of the covered cord, the extended line extending from one end portion of the covered cord in a plan view.

2. The tire according to claim 1, wherein the covered cord is formed by covering the one or the plurality of the reinforcing cords with a resin.

3. The tire according to claim 1 or 2, wherein the RF tag is disposed in a vicinity of the one end portion of the covered cord.

4. The tire according to any one of claims 1 to 3, wherein the RF tag is disposed such that a longitudinal side of the RF tag follows the extended line in a plan view.

5. The tire according to any one of claims 1 to 4, wherein the RF tag and another end portion of the covered cord overlap with each other in the tire circumferential direction in a plan view.

6. The tire according to any one of claims 1 to 5, wherein the tire frame member is formed from a resin material.

7. The tire according to claim 6, wherein:
the RF tag includes a resin case having flexibility, and an RFID chip and an antenna housed in the case, and
the case is welded to the crown portion.

8. A non-pneumatic tire, comprising:
a wheel member attachable to an axle;
a ring member fitted to the wheel member;
a spiral reinforcing layer formed by spirally winding an element wire body in which one a plurality of cords parallel to each other are embedded in a covering body at an outer circumferential surface of the ring member;
a tread member surrounding an outer side, in a tire radial direction, of the spiral reinforcing layer; and
a communication device disposed adjacent to an end surface at one side of the element wire body in a tire circumferential direction.

9. The non-pneumatic tire according to claim 8, wherein the communication device is entirely located, in a tire width direction, at an inner side of an outer side end of the end surface at the one side of the element wire body.

10. The non-pneumatic tire according to claim 9, wherein the communication device is entirely located, in the tire width direction, at an inner side of an outer side end of an end surface of the one or the plurality of the cords in the end surface at the one side of the element wire body.

11. The non-pneumatic tire according to any one of claims 8 to 10, wherein the communication device is entirely located, in the tire radial direction, at an inner side of an outer side end in the tire radial direction of the end surface at the one side of the element wire body.

12. The non-pneumatic tire according to claim 11, wherein the communication device is entirely located, in the tire radial direction, at an inner side of an outer side end in the tire radial direction of an end surface of the one or the plurality of cords in the end surface at the one side of the element wire body.

13. The non-pneumatic tire according to any one of claims 8 to 12, wherein:
the communication device has an elongated shape, and
the communication device is disposed so as to have a longitudinal side following the tire circumferential direction.

14. The non-pneumatic tire according to any one of claims 8 to 13, wherein:
the ring member includes:
an inner tubular body fitted to the wheel member;
an outer tubular body surrounding an outer side of the inner tubular body in the tire radial direction; and
a connecting member connecting the inner tubular body and the outer tubular body and being elastically deformable between the inner tubular body and the outer tubular body, and
the spiral reinforcing layer is formed by spirally winding the element wire body on an outer circumferential surface of the outer tubular body.

15. The non-pneumatic tire according to any one of claims 8 to 14, wherein the communication device is an RF tag.
